# EUROPEAN PATENT APPLICATION

(11) **EP 1 686 738 A1**
(43) Date of publication of application: **02.08.2006**
(21) Application number: 05425038.6
(22) Date of filing: 31.01.2005
(51) Int. Cl.: H04L 12/56, H04L 12/18

(54) **Method and system for QoS management in multicast multimedia services, related network, terminal for use in that network and computer program product therefor**

(71) Applicant: Siemens S.p.A., 20126 Milano (IT)
(72) Inventor: Porcari, Mirco, 29016 Cortemaggiore (IT); Trivisonno, Riccardo, 20146 Milano (IT)

(57) **Abstract**

A QoS management technique for multimedia multicasting to a group of users (UE1, UE2, UE3, UE4) within MBMS service in mobile networks is presented. Each service multimedia content is available with different qualities of service (QoS0, QoS1, QoS2) at different IP multicast addresses (a.b.c.d; a.b.c.e; a.b.c.f). The system includes at least one element (BM-SC) configured for dynamically estimating, for each user (UE1, UE2, UE3, UE4) accessing a service, the quality (K1, K2, ..., Kn) of the respective link and determining a corresponding quality of service (QoS0, QoS1, QoS2) that can be guaranteed to the user and a corresponding proper IP multicast address (a.b.c.d; a.b.c.e; a.b.c.f) the user must be associated with. The element (BM-SC) managing the system is configured for forcing to leave their current IP multicast address and to join the proper corresponding IP multicast address (a.b.c.d; a.b.c.e; a.b.c.f) those users (UE1, UE2, UE3, UE4) for which the corresponding quality of service (QoS0, QoS1, QoS2) does not correspond to the current quality (K1, K2, ..., Kn) of said respective link, thereby ensuring that each user (UE1, UE2, UE3, UE4) accessing the system is associated to the proper IP multicast address (a.b.c.d; a.b.c.e; a.b.c.f).

## Description

### Field of the invention

The invention relates to the management of the Quality of Service (QoS) in a communication environment.

The invention as devised by paying specific attention to the possible application to QoS management for Multicast Multimedia Service in Multicast Broadcast Multimedia Service (MBMS) context.

### Description of the related art

As defined in the document developed within the Third Generation Partnership Project (3GPP), "Multimedia Broadcast/Multicast Service; Stage 1 ", Technical Specification 22.146, October 2004 Multicast Broadcast Multimedia Service (MBMS) is a point-to-multipoint service where data is transmitted from a single source entity to multiple recipients. Transmitting the same data to multiple recipients allows network resources to be shared.

Two different modes of operation are foreseen:
- the broadcast mode
- the multicast mode.

The broadcast mode is a unidirectional point-to-multipoint transmission of multimedia data (e.g. text, audio; picture, video) from a single source entity to all users in a broadcast area or areas, while the multicast mode allows the unidirectional point-to-multipoint transmission of multimedia data from a single source point to a multicast group in a multicast area.

Both modes of operation are intended to efficiently use radio/network resources, i.e. data is transmitted over a common radio channel. Data is transmitted to broadcast or multicast areas as defined by the network.

As currently configured, the MBMS defines one multicast group for each of the services it handles (e.g. weather, traffic, daily football goals); based on the data/signaling multimedia transport protocols (RTP/RTCP) this multicast group foresees a multimedia streaming session with a predefined encoding quality defined by a number of encoding parameters among which the bandwidth and the frame rate. All the subscribed users who joined the service will receive this flow. According to the encoding parameters of the flow and to their coverage conditions and radio resources allocation, the subscribers will experience different quality without any possibility of changing it (either to improve the quality if they could get an higher quality stream, or to require a lower encoding quality from the network because the current one is too high for the present capabilities of the mobile terminal (MT)).

General information on multimedia transport protocols such as the RTP protocol can be found in H. Schulzrinne, S. Casner, R. Frederick, V. Jacobson, "RTP: A Transport Protocol for Real-Time Applications" RFC 3550, July 2003.

QoS management for Multimedia Multicast service has been approached in several ways, and the problem of QoS management for multicast services has been addressed for a long time. Many different approaches to the problem can be found in the literature.

In W. Effelsberg, E. Muller-Menard, "Dynamic Join and Leave for Real Time Multicast" (Technical Report TR-93-056, Tenet Group, U.C. Berkeley and ICSI, October 1993, http://citeseer.ist.psu.edu/effelsberg93dynamic.html) a dynamic join-leave mechanism is introduced in order to find an optimum attachment point to the multicast tree with the aim of optimizing network resources utilization (and, consequently, optimizing users performance) for real time streaming data services. This approach guarantees that performance is maintained in case of network topology and/or traffic changes.

In S. Sarkar, L. Tassiulas, "Layered Bandwidth Allocation for Multicasting of Hierarchically Encoded Sources" (url = "citeseer.ist.psu.edu/297420.html) a layered bandwidth allocation method is presented; basically, the multimedia content is hierarchically encoded in several layers. Each encoding layer improves the quality of the multimedia stream but, at the same time, requires additional resources in terms of bandwidth. Depending on network resource availability and/or Service Provider-Users connection capacity, the required bandwidth can be adapted to the resources that are actually available by transmitting a subset at the available encoding layers. This could guarantee the delivery of multimedia content to each user according to the capacity of the radio interface.

In S. Sen, D. Towsley, Z. Li Zhang, J. K. Dey, "Optimal Multicast Smoothing of Streaming Video over an Internetwork"(INFOCOM '99, Eighteenth Annual Joint Conference of the IEEE Computer and Communications Societies. Proceedings. IEEE, Volume: 2, 21-25 March 1999, Pages:455 - 463 vol.2) the use of multicasting smoothed video and differential caching at intermediate network nodes for heterogeneous environments is proposed. Different parts of the network may have different bandwidth capacity and/or may be carrying different traffic loads; internal nodes may have different amount of resources (internal buffer sizes) and finally clients may have different connectivity to the network. The paper presents a video traffic smoothing technique for pre-stored video file in order to optimize the delivery of the contents to a set of multicast users. The problem of caching at network node is also taken into account.

In T. S. Eugene Ng, Y. Chu, S. G. Rao, K. Sripanidkulchai, H. Zhang, "Measurement-Based Optimization Techniques for Bandwidth-Demanding Peer-to-Peer Systems", (INFOCOM 2003, Twenty-Second Annual Joint Conference of the IEEE Computer and Communications Societies. IEEE ,Volume: 3 ,30 March-3 April 2003, Pages:2199 - 2209 vol.3;) the author propose measurement-based network optimization to improve performance of bandwidth demanding peer to peer systems. Methods designated Round Trip Time probing, 10kB TCP probing and Bottleneck Bandwidth probing are considered.

The paper by J. Liu, B. Li, Y. Zhang, "An End to End Adaptation Protocol for Layered Video Multicast Using Optimal Rate Allocation" (Multimedia, IEEE Transactions on, Volume: 6, Issue: 1, Feb. 2004, Pages:87 - 102) discusses an evolution of layered transmission of video multicast over a heterogeneous networks. The analysis points out the limitation of the layered approach, stating the coarse-grained video layering combined with dynamic receivers bandwidth capacity. A dynamic fine-grained layer rate allocation, compatible with the best effort internet infrastructure, is presented.

The provision of seamless QoS for multimedia multicast in wireless packet networks is addressed in D. Xu, B. Li, K. Nahrstedt, J. W. S. Liu, "Providing Seamless QoS for Multimedia Multicast in Wireless Packet Networks" (in Proceedings of SPIE Multimedia Systems and Applications, (Boston, MA, USA), pp. 352-361, 1999. http://citeseer.ist.psu.edu/article/xu99providing.html). A new protocol is presented with the goal of guaranteeing, for all users of the packet network (regardless their location and, thus, the QoS profile being guaranteed), nearly the same packet delay and packet delay jitter. Inter-cell and intra-cell jitter control mechanisms are introduced to achieve this goal.

The problem of multicast in mobile network is also addressed in K. Brown, S. Singh, "The problem of Multicast in Mobile Networks" (Proceedings IC3N conference, October, 1996, pp. 278-282.). An optimal channel allocation algorithm within a cell (and extendible to the multicell case) is presented, with the aim of handling QoS profile according to requirements.

The problem of maximizing the aggregate user data rate in multirate-multicasting of real time applications is mathematically examined in K. Kar, S. Sarkar, L. Tassiulas, "Optimization Based rate Control for Multirate Multicast Sessions"(INFOCOM 2001, Twentieth Annual Joint Conference of the IEEE Computer and Communications Societies. Proceedings, IEEE, Volume: 1, 22-26 April 2001, Pages:123 - 132 vol.1*)*.

A combined sender rate adaptation, filtering and transcoding inside the transmission path and a receiver adaptation method is analyzed in A. Kassler, A. Schorr, "Generic QoS Aware Media Stream Transcoding And Adaptation" (Packet Video 2003, April 28-29, Nantes, France).This apporach has the basic aim of achieving an appropriate trade-off between flexibility, bandwidth efficiency and security.

Finally, an attempt to provide QoS in multimedia multicasting via admission control and resource reservation is presented in V. Firoiu, D. Towsley, "Call Admission and Resource Reservation for Multicast Sessions" (INFOCOM '96, Fifteenth Annual Joint Conference of the IEEE Computer Societies. Networking the Next Generation, Proceedings IEEE, Volume: 1, 24-28 March 1996, Pages:94 - 101, vol.1*)*.

### Object and summary of the invention

Despite the significant efforts witnessed by the prior art documents considered in the previous subsection, the need is still felt for an arrangement wherein e.g. each user may dynamically access the multimedia content with the highest level of quality compatible with the quality of the wireless link.

The object of the invention is thus to provide an improved solution fulfilling such a need.

According to the present invention, that object is achieved by means of a method having the features set forth in the claims that follow. The invention also relates to a corresponding system, a related network, a terminal for use in that network as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion. The claims are an integral part of the disclosure of the invention provided herein.

The approach described herein allows a flexible QoS management from operators point of view and a minimal impact on mobile terminals. In the presently preferred embodiment of the invention the object outlined above is achieved via three distinct logical steps:
- a) for each given service, the multimedia content is available with different qualities at different IP multicast addresses;
- b) for each user accessing the service, the service provider (SP) dynamically estimates the quality (e.g. the available bandwidth) of the link and determines the proper QoS which can be guaranteed to the user and, hence, the IP multicast address it must be associated with; and
- c) users who are not fully exploiting the available bandwidth or who are receiving a flow too demanding for the current MT capabilities , are forced to leave the current IP Multicast Address and to join the proper IP Multicast Address determined by the SP.

As a consequence, the following advantageous results are achieved:
- users can access multimedia contents with the proper level of QoS compatible with the quality of the wireless link, minimizing the risk of stall&rebuffering during the media playout;
- radio resources are exploited in an optimum manner for each wireless connection;
- standard IETF protocols (compliant with protocols at present deployed) can be used;
- the impact on mobile terminals is negligible (in fact only the capability of interpreting a new message on the Gmb interface is needed); and
- the computational effort is at the BM-SC level only.

A total flexibilty in QoS Management is achieved from the point of view of network operators based on: a) the service considered, b) the importance of the service from operator's point of view, c) the availability of radio resources, d) the number of users subscribed to that service. Specifically, network operators can determine the aspect that has to be dealt with highest priority (efficient use of radio resource, effective QoS management).

### Brief description of the annexed drawings

The invention will now be described, by way of example only, with reference to the enclosed figures of drawing, wherein:
- Figure 1 shows a typical MBMS - 3GPP reference architecture,
- Figure 2 is representative of typical operation of a conventional architecture as shown in Figure 1,
- Figures 3 to 7 show five phases of operation of the arrangement described herein, and
- Figures 8 to 11 are exemplary of operation of the arrangement described herein.

### Detailed description of preferred embodiments of the invention

The arrangement described herein has been designed with the aim of defining a solution for QoS handling in Multimedia Broadcast Multicast (MBMS)-streaming-services.

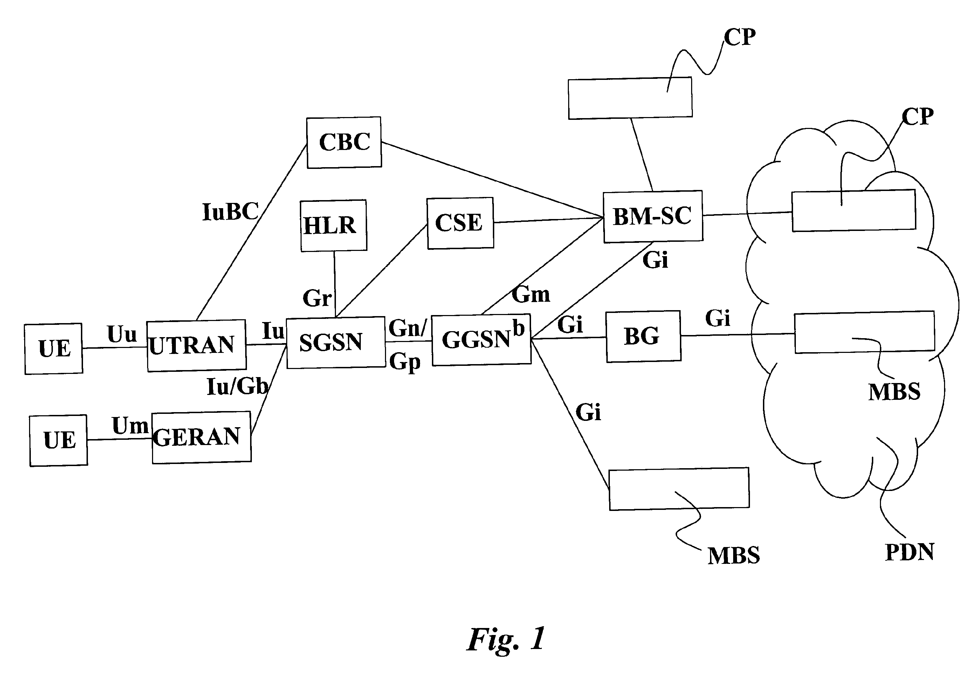

The block diagram of Figure 1 shows a typical MBMS - 3 GPP reference architecture, wherein user terminals (user equipment UE) are provided such services by one or more Service Providers represented by Content Providers CP and Multicast Broadcast Sources MBS, possibly included in a Public Data Network PDN. Connection of each user equipment UE to the serive sources is via a typical cellular network infrastructure, whose elements are identified in the block diagram of Figure 1 via the corresponding acronyms that are well known to those of skill in the art, namely:
UTRAN = Universal Terrestrial Radio Access Network
GERAN = GSM/EDGE Radio Access Network
BM-SC = Broadcast Multicast Service Center
CBC = Cell Broadcast Center
HLR = Home Location Register
CSE = Camel Service Environment
SGSN = Serving GPRS Serving Node
GGSN = Gateway GPRS Serving Node
BG = Border Gateway
Uu = UTRAN/UE Radio Interface
Um = GERAN/UE Radio Interface
lu = RNC/Core Network Interconnection Point
luBC = RNC/Node B Interconnection point

The general principles and criteria of operation of an architecture as shown in Figure 1 are well known to those of skill in the art, thus making it unnecessary to provide a more detailed explanation herein.

For the purposes of this description, it will suffice to recall that the Multimedia Broadcast/Multicast Service (MBMS) is a service expected to become fully operative in 3GPP Release 6 mobile networks (2.5G and 3G) for delivering multimedia contents, differentiated in categories, in a push-like manner to a number of subscribed users. This occurs mainly using streaming, but also other delivery methods are possible.

Bandwidth is a limiting factor, while multimedia applications require high bit rates. Consequently, MBMS aims at minimizing the network resources required by adopting the concept of multicast (and consequently of broadcast) already widely in use in fixed IP networks.

In addition to new functionalities added to existing network elements and in the user equipment, the introduction of MBMS requires one new network element and one new interface supplmenting a standard 2.5G/3G mobile networks architecture.
The new network element is named a BM-SC (Broadcast/Multicast Service Centre). This is logically located between the GGSN and the content providers (the sources of the multimedia contents), and its task is to manage the service in all the phases, in addition to handling the subscriptions of users and the availability of the contents. In brief the BM-SC plays the role of Service Provider (SP) for the family of MBMS services.

As shown in Figure 1, the BM-SC is connected to the GGSN via two interfaces:
- the interface designated Gi, which is already in use for the connection between GGSN and external IP networks, and which is used in this service for carrying data traffic; and
- an interface designated Gmb, specifically introduced for carrying all the signalling and control information related to MBMS.

Generally, providing MBMS services consists in a number of phases, namely:
- Subscription: users have to subscribe to the service for receiving data and related information;
- Service Announcement: the network informs the users UE of content deliveries currently active or that will become active soon, in the area where users are located; this announcement can be done with a SMS, a MMS or other non-standardized methods;
- Joining: the user accepts to receive a certain content by joining the corresponding multicast group (in a transparent way, when the user selects the content, the user terminal UE sends an IGMP join message, typical of the IP multicast networks);
- Session start: the BM-SC is ready to start a certain content delivery (note: all the content delivery in MBMS are BM-SC initiated);
- MBMS notification: the networks collects information about the users joined to the current content delivery, also with a view to possibly evaluating different choices (e.g. multicast versus multi-unicast);
- Data Transfer: the actual content delivery;
- Session Stop: the content has been entirely delivered; and
- Leaving: the user quits the session (in a transparent way, the user's MT sends an IGMP leave message, typical of the IP multicast networks).

These phases are not required to be executed in the strict order inidcated: for example, a user can join a session when this session has already initiated, or can leave the session before the content delivery is terminated.

For the purposes of this description, it will suffice to recall that the starting point of operation involves having a Service Provider SP multicasting an audio-video streaming and a group of wireless/mobile users UE joined to the service that are receiving and playing out the media file.

Users will generally experience different (wireless) link quality i.e. different users may have different available bandwidth on the radio interface. Moreover, the Service Provider SP can provide the same multimedia content with different QoS level, i.e. the same media file can be streamed out with different encoding formats, having different characteristics/ requirements in terms of average bandwidth.

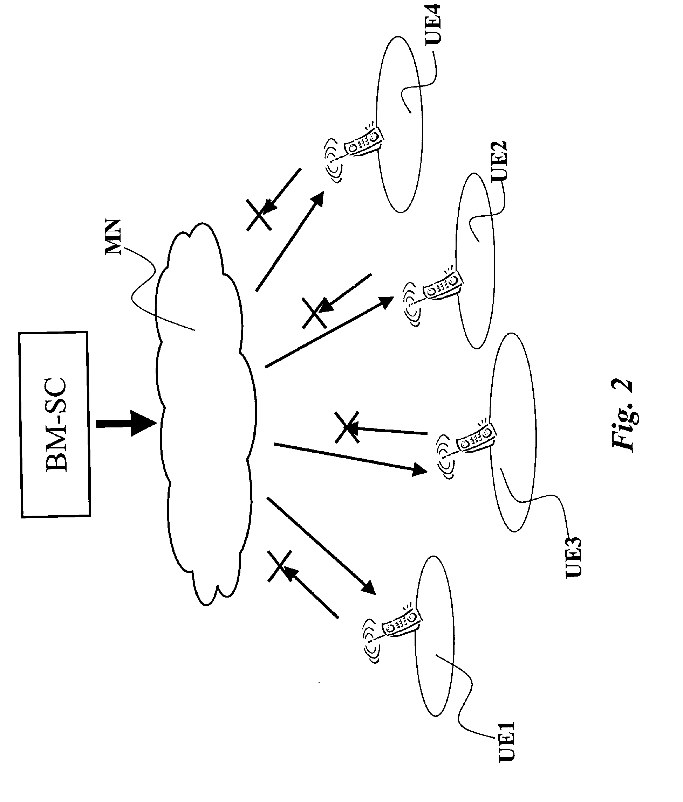

This situation is schematically depicted in Figure 2, where a Service Provider BM-SC is shown providing the same multimedia content in the form of a stream multicast over a mobile network MN with a quality defined a-priori to different users (or groups of users) UE1, UE2, UE3 and UE4.

Hereinafter it will be generally assumed that the quality perceived is:
- good, in the case of users UE1 and UE2,
- medium, in the case of user UE3, and
- bad, in the case of user UE4.

The user terminals UE1 to UE4 each issue respective Receiver Report (RR) messages in the form of a RTCP message known as RR RTCP MSG.

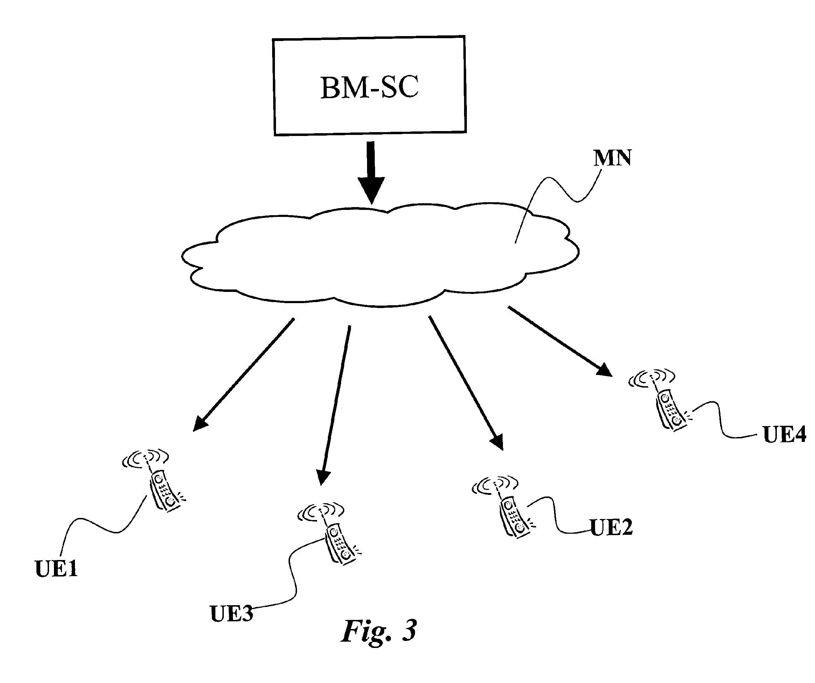

Essentially, the main goals achieved in the arrangement described herein (whose principles of operation will now be described in connection with figures 3 to 7) are the following :
- each user is permitted to experience the highest QoS according to each wireless channel characteristics within a framework fully compatible with and based on standardized transport protocols such as RTP/RTCP;
- the whole logic for QoS handling can be deployed at the BM-SC center, and
- a QoS mechanism is introduced with a negligible impact on the user terminals UE in terms of computational effort; this mechanism does not require any new functionalities at the UE level in order to guarantee an effective QoS management regardless the availability of UE of a particularly sophisticatd type.

Specifically, the description herein refers, by way of example only, to an arrangement designed to provide MBMS (Multimedia Broadcast Multicast Service) service to users of 2.5G (GPRS/EDGE) and 3G (UMTS) mobile networks. Nevertheless, the arrangement described is suitable to operate with any type of network (e.g. any B3G wireless system) supporting multicast services with the aim of providing to each user dynamically accessing the multimedia content the highest level of quality compatible with the quality of the wireless link.

Figure 3 shows a first phase of operation of an improved arrangement as described herein: again a Service Provider BM-SC is shown providing the same multimedia content in the form of a multicast stream over a mobile network MN with a quality defined a-priori to different users (or groups of users) UE1, UE2, UE3 and UE4.

It will be generally assumed that, as it currently is, for each service provided, different QoSᵢ Multicasting Groups are defined, each one associated to a different Quality of Service profile (each one associated to a different set of encoding parameters) and, consequently characterized by different bandwidth requirements.

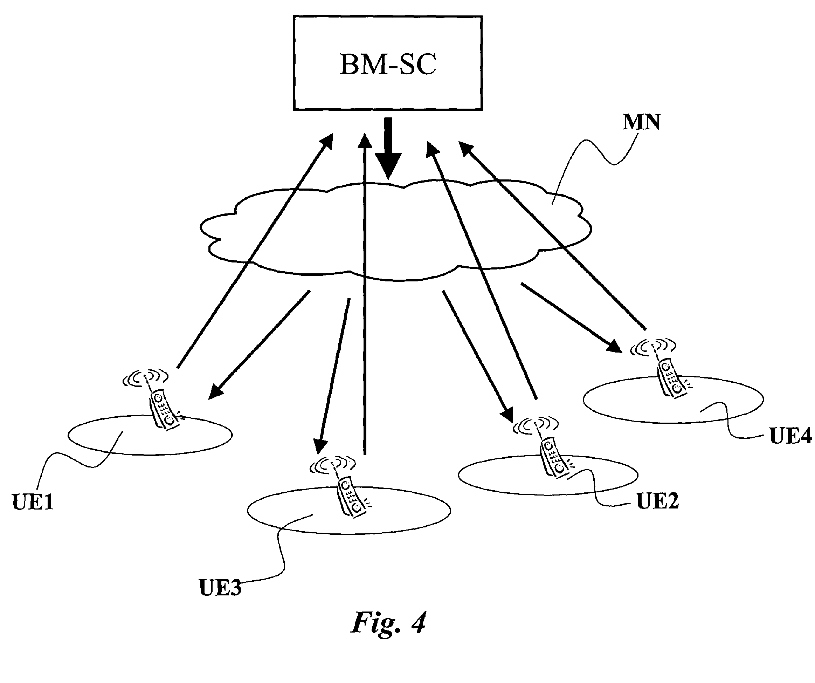

Figure 4 again refers to a situation where the quality perceived is good, in the case of users UE1 and UE2; medium, in the case of user UE3; and bad, in the case of user UE4.

Specifically, Figure 4 shows a second phase where the received quality is analyzed and the various terminals UE each issue respective Receiver Report (RR) messages (RR RTCP MSG).

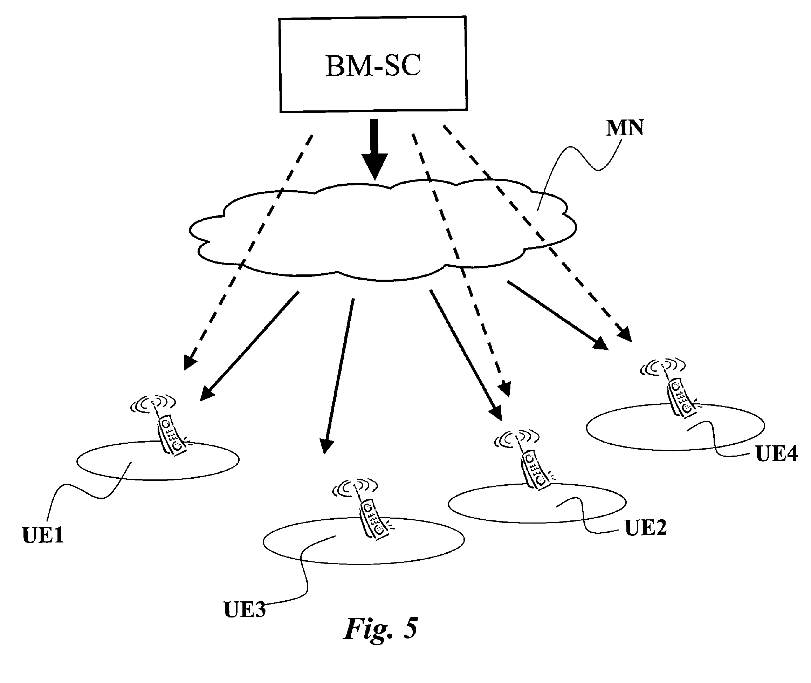

Figure 5 shows a third operating phase where the BM-SC element analyzes the Receiver Report messages received from the various terminals UE1 to UE4 and issues "Group Switch" messages to the terminals UE1 to UE4. In practice, for each user associated (joined) to the service, an RTCP based MT -> SP (i.e. from the Mobile Terminal to the Service Provider) control flow is established. Via this control flow, the mobile terminals UE1 to UE4 send a connection feedback which allows a QoS manager function at the Service Provider (i.e. at the BM-SC element) to estimate the bandwidth available for each user connection. Based on this estimation, the QoS manager matches each user with a proper multicasting group.

The analysis of the Receiver Report messages and the issue of the Group Switch messages by the BM-SC element is based on three distinct logical steps:
- a) for each given service, the multimedia content is available with different qualities at different IP multicast addresses;
- b) for each user accessing the service, the service provider SP (which specifically for MBMS is the network element BM-SC) dynamically estimates the quality (i.e. the available bandwidth) of the wireless link and determines the proper QoS which can be guaranteed to the user and, hence, a IP multicast address it should be associated with; and
- c) users that are not fully exploiting the available bandwidth or are trying to access the service at a wrong QoS level are forced to leave their current IP Multicast Address and to join (i.e. to "switch" to) the proper IP Multicast Address determined by the SP.

In that way, all users can access the multimedia service experiencing the highest level of quality compatible with the quality of their (usually time varying) wireless link. This is accomplished by a network-initiated/server-driven approach: in fact, the QoS scheme is based upon connection quality indicators provided by user equipment (mobile terminals or MTs), while the connection state estimations and QoS adaptation algorithm are performed at Service Provider, that is, for MBMS, at the BM-SC level.

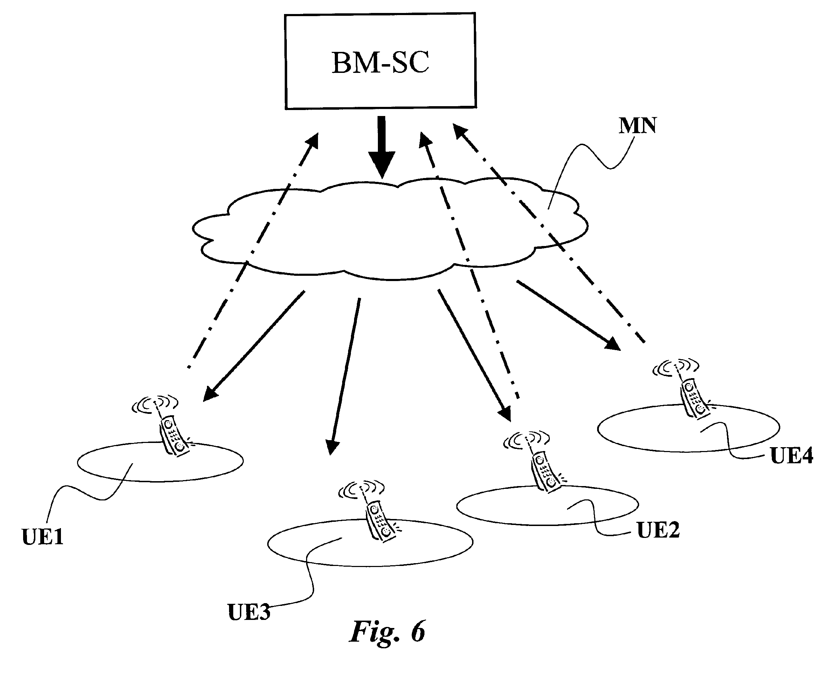

Figure 6 shows a fourth phase in operation of the arrangemnt described herein, namely a phase where, after receiving the Group Switch messages from the BM-SC element, the various terminals UE1 to UE4 undertake the corresponding actions.

This essentially involves, for those users that are joined to an unsuitable QoSᵢ Multicasting Group, a fast SP driven leave/join procedure that causes each user to join the highest QoSᵢ Multicasting Group which can be handled.

In the presently preferred embodiment, a QoS metric J=F(J1, J2, Jm) is computed as a function of a number of connection state estimators J1, J2,...Jm, which can be part of signalling information carried by Receiver Reports. Such metric is computed at BM-SC for each MT connection.

The operation just described is preferably based on four different logical steps/items:
I) QoS Classes and Switching Thresholds Definition
   For each service S provided, a number of N_{S} (>=1) QoS Classes is pre-defined. Each QoS Class QoS_{Si} is characterized by a quality of service profile identified by a set of n values for the encoding parameters (En1, En2,... Enn) associated to the service.
   For each service S provided by MBMS a set of N_{S} - 1 switching thresholds T_{j,j+1} for the metric J is pre-defined.
   For each MT connection, the comparison between the computed metric J and a set of the switching thresholds T_{j,j+1} determines the proper QoS class for the connection.
II) QoS Estimation
   For each ongoing session, the BM-SC element periodically monitors the QoS status of the connection, by computing the QoS metric J, exploiting QoS indicators (J1, J2,...Jm) carried by end to end control protocol(s).
III) QoS Class Switching Criteria
   Based on the computed metrics, a comparison with the switching thresholds determines the proper QoS class which can be efficiently and effectively supported by each connection.
IV) Switching Trigger
   If the proper estimated QoS class for a given connection does not correspond to the current QoS class, the BM-SC element forces the user equipment (Mobile Terminal or MT) involved to change the QoS class by sending a leave-join message to that user equipment.

As a result, each QoS class is uniquely associated to a different IP multicast address. Therefore the leave-join message forces firstly the user equipment or MT involved to leave the current multicast group, and then to join the group corresponding to the QoS class estimated as being the proper one.

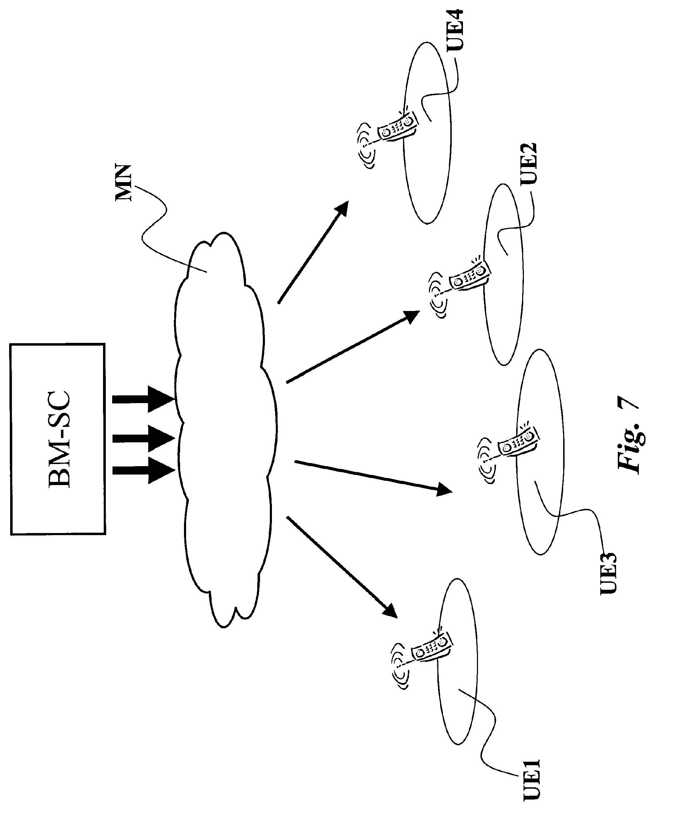

As schematically shown in Figure 6, this may result in certain terminals leaving their "default" class to join a "better" class, while other terminals will leave their default class to join a "worse" one. The starting arrangement shown in Figure 3, with a multicast stream with a quality defined a priori, will thus be superseded by the final arrangement shown in Figure 7, involving differentiated transmissions "tailored" on the specific characteristics (e.g. bandwidth available at the moment) of each user terminal UE1 to UE4.

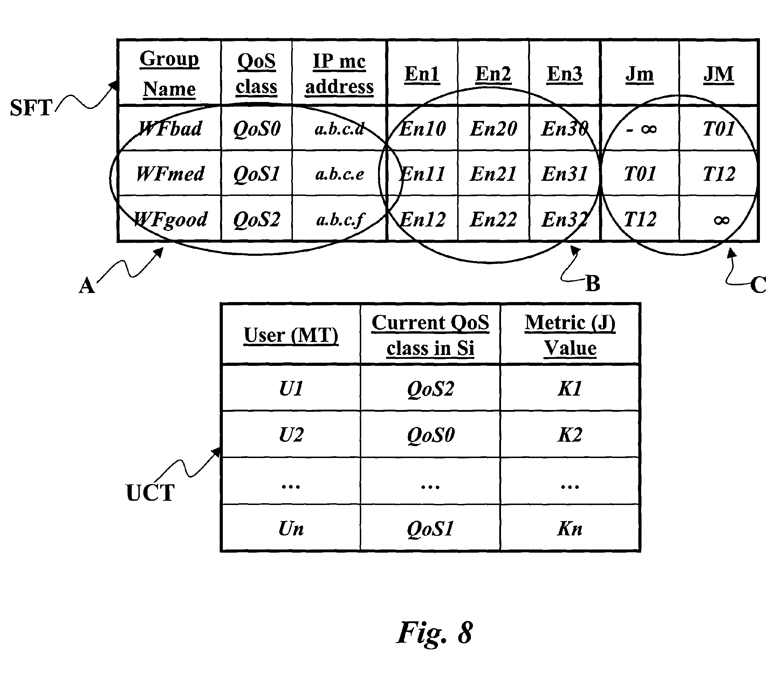

By way of further explanation, Figure 8 shows a possible arrangement of a Service Parameters Table SPT statically defined by a Service Provider when a certain service (e.g. Weather Report) is launched or initialized after a change. The table SPT will generally include three sub-tables designated A, B, and C, respectively.

The sub-table A includes group names (Wfbad, Wfmed, Wfgood for e.g.), QoS classes (namely QoS0, Qos1, QoS2) and the associated IP multicast address (a.b.c.d, a.b.c.e, a.b.c.f.),

The sub-table B includes a set of encoding parameters En1, En2, En3, ... (e.g. assigned bandwidth, frame rate, picture size, ...) for each QoS class. The parameters characterizing "Wfbad" group will thus be En10, En20, En30, ...; the parameters characterizing the "Wfmed" group will be En11, En21, En31, ... and the parameters characterizing "Wfgood" group will be En12, En22, En32,... and so on.

Finally, the sub-table C includes ranges of admitted values for the metric J in each QoS class.

A User (mobile terminal) Connection Table UCT is shown in Figure 8. UCT contains, for each user U1, U2, U3, ..., Un, an entry representative of the current QoS class to which the user is associated (joined), plus at least one entry representative of the current value of the metrics J. This table (which is typically resident with the BM-SC element) is periodically updated based on the current measured values provided by the connection state estimators.

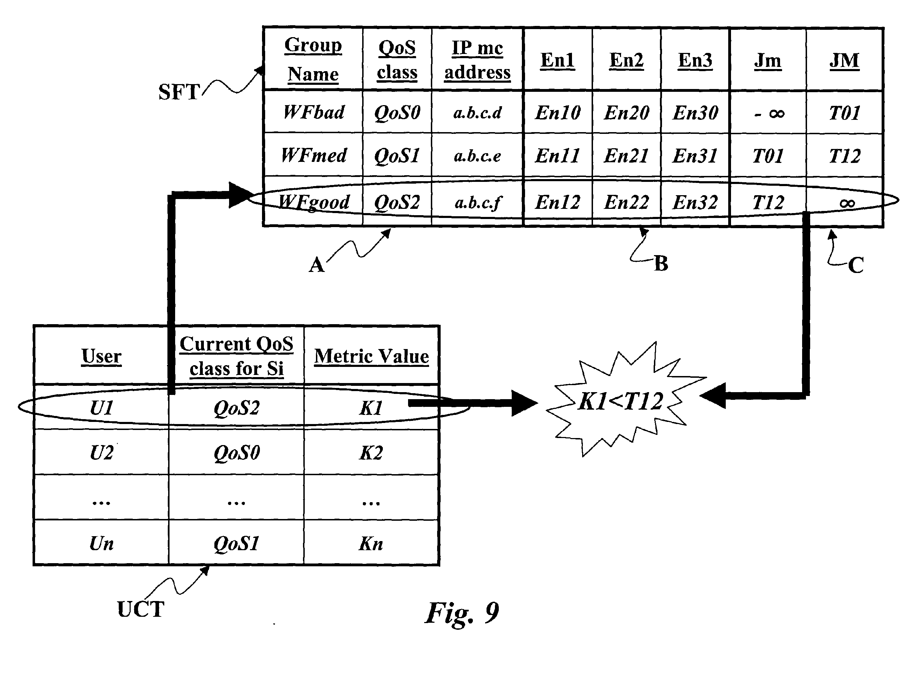

Figure 9 is representative of the events occurring when, as a result of such an update, the metric value K1 of a certain user (e.g. user U1, currently assigned/joined to QoS class QoS2 - i.e. WFgood) falls below the minimum threshold value T12 for the current class. Specifically, K1 falling below T12 means that the updated metrics value is now within the metrics range for the QoS class QoS1 - i.e. WFmed.

As a consequence, user U1 leaves its current group (WFgood=a.b.c.f) to join the group QoS1 (WFmed=a.b.c.e).

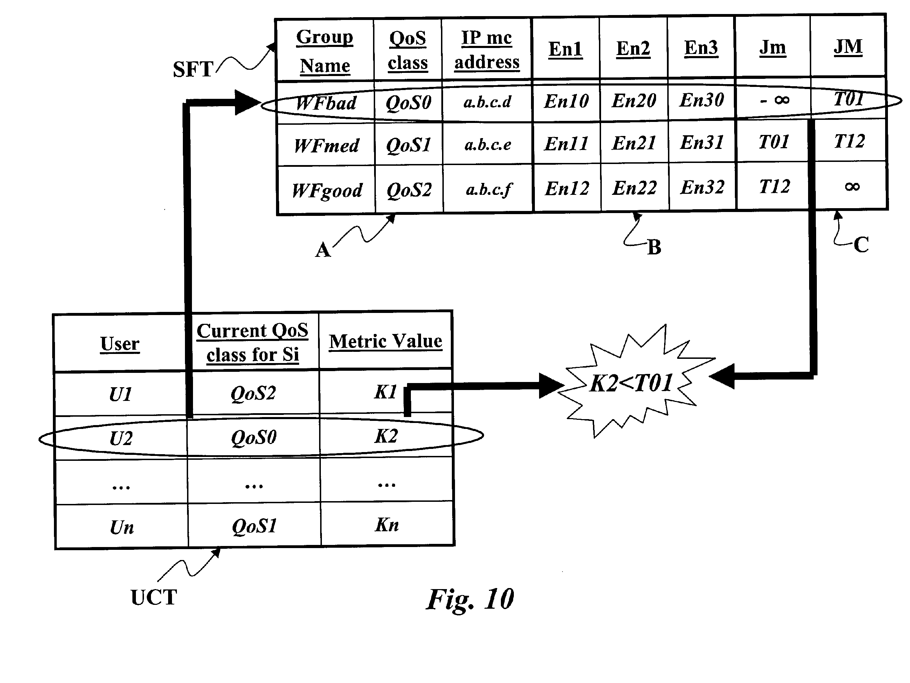

By way of direct comparison, Figure 10 is representative of the events occurring when, as a result of a metrics value update, the actual metric value K2 of a certain user (e.g. user U2, currently assigned/joined to QoS class QoS0 - i.e. WFbad) is found to be still below the minimum threshold value T01 for that current class. This means that, despite the update, the updated metrics value is still within the metrics range for the QoS class QoS0 - i.e. WFbad.

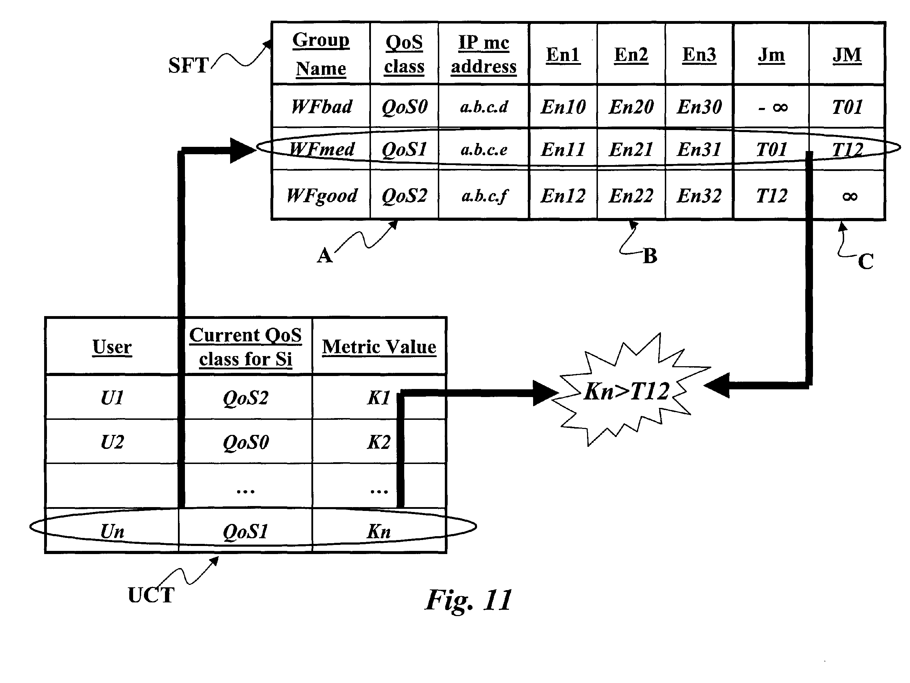

Again by way of direct comparison, Figure 11 is representative of the events occurring when, as a result of such an update, the actual metric value Kn of a certain user (e.g. user Un, currently assigned/joined to QoS class QoS1 - i.e. WFmed) exceeds the minimum threshold value T12 for the QoS class QoS2. This means that the updated metrics value Kn is now within the metrics range for the QoS class QoS2 - i.e. WFgood.

As a consequence, user Un leaves its current group (WFmed=a.b.c.e) to join the group QoS2 (WFgood=a.b.c.f).

It will be appreciated that the arrangement described herein is based on a concept that significantly differs from the concepts underlying the various prior art arrangements considered in the introductory portion of this description.

The arrangement described herein is i.a. easier and more effective to implement for a number of reasons, including the following:
- the whole logic for QoS handling is under the responsibility of the BM-SC module, i.e. the very element introduced for managing all logics in MBMS service;
- a new protocol can be introduced with the task of communicating to the user terminals UE to proceed with a switch in the multicast group they are included in; this protocol can be easily supported by the Gmb interface, specifically introduced for MBMS signaling; and
- the user equipment UE supporting MBMS is already provided "onboard" with the functions required for joining and leaving multicast groups, therefore the only required functionality to be introduced is the capability to understand the new protocol and to be able to perform in sequence one leave and one join operations.

The main advantages expected to derive from using the QoS management mechanism described herein are:
- a high flexibility from the point of view of Network Operators in MBMS QoS management: network operators can define a proper set of QoS classes for each different service and hence manage the trade off between radio resource utilizations and QoS management "grainess;
- the computational effort concentrated at the BM-SC level;
- a minimum impact on user equipment (mobile terminals or MTs), since only the ability to interprete the novel leave-join message is required; and
- no need of defining new interfaces: the arrangement described is fully compliant with standard IETF protocols such as RTP/RTCP.

Without prejudice to the underlying principles of the invention, the details and the embodiments may vary, also appreciably, with reference to what has been described, by way of example only, without departing from the scope of the invention as defined in the claims that follow.

## Claims

1. A method of controlling delivery of services based on multicast multimedia contents to a set of users (UE1, UE2, UE3, UE4) via respective links in a network, wherein for each service multimedia content is available with different qualities of service (QoS0, QoS1, QoS2) at different IP multicast addresses (a.b.c.d; a.b.c.e; a.b.c.f), the method including the steps of:
- for each user (UE1, UE2, UE3, UE4) accessing one of said services, dynamically estimating the quality (K1, K2, ..., Kn) of the respective link and determining a corresponding quality of service (QoS0, QoS1, QoS2) that can be guaranteed to said user and a corresponding proper IP multicast address (a.b.c.d; a.b.c.e; a.b.c.f) said user must be associated with; and
- ensuring that each user (UE1, UE2, UE3, UE4) accessing one of said services via a respective link, is associated to said proper IP multicast address (a.b.c.d; a.b.c.e; a.b.c.f) said user must be associated with.

2. The method of claim 1, **characterized in that** said step of ensuring includes the operation of forcing to leave their current IP multicast address and to join said proper corresponding IP multicast address (a.b.c.d; a.b.c.e; a.b.c.f) those users (UE1, UE2, UE3, UE4) for which said corresponding quality of service (QoS0, QoS1, QoS2) does not correspond to the current quality (K1, K2, ..., Kn) of said respective link.

3. The method of claim 2, **characterized in that** said step of ensuring includes the operation of forcing to leave their current IP multicast address and to join said proper corresponding IP multicast address (a.b.c.d; a.b.c.e; a.b.c.f) those users (UE1, UE2, UE3, UE4) that:
- are not fully exploiting the quality of service available on said respective link, or
- are trying to access one of said services at a quality of service (QoS) different from said corresponding quality of service (QoS0, QoS1, QoS2).

4. The method of any of the previous claims, **characterized in that** said step of ensuring includes the operation of sending leave-join messages to those users (UE1, UE2, UE3, UE4) that are forced to leave their current IP multicast address and to join said proper corresponding IP multicast address (a.b.c.d; a.b.c.e; a.b.c.f).

5. The method of any of the previous claims, **characterized in that** it includes the step of defining, for each of said services, a number (Ns) of quality of service (QoS) classes (QoS0, QoS1, QoS2), each class being **characterized by** a quality of service (QoS) profile identified by a set of values for respective encoding parameters (En1,En2,...Enn).

6. The method of claim 5, **characterized in that** it includes the step of selecting said respective encoding parameters (En1, En2, ..., Enn) out of the group consisting of assigned bandwidth, frame rate, and picture size.

7. The method of either of claims 5 or 6, **characterized in that** it includes the step of establishing a 1:1 association between each said quality of service class (QoS0, QoS1, QoS2) and one said proper corresponding IP multicast address (a.b.c.d; a.b.c.e; a.b.c.f).

8. The method of any of the previous claims 5 to 7, **characterized in that** said step of dynamically estimating includes the operations of:
- defining a quality of service metrics (J) as a function (F(J1,J2,...Jm)) of quality of service indicators (J1,...,Jm),
- defining a corresponding set of quality of service thresholds (T_{1,2}, T_{i,i+1},...T_{Ns-1,Ns}) within said quality of service metrics (J), and
- estimating the quality of said respective link based on said metrics (J) and univocally associating the quality estimated to one of said quality of service (QoS) classes (QoS0, QoS1, QoS2) by comparing the quality estimated with said quality of service thresholds (T_{1,2}, T_{i,i+1},...T_{Ns-1,Ns}).

9. The method of any of the previous claims, **characterized in that** said step of dynamically estimating is performed at the Service Provider (BM-SC) side.

10. The method of any of the previous claims, **characterized in that** said services are primarily delivered via streaming.

11. A system for controlling delivery of services based on multicast multimedia contents to a set of users (UE1, UE2, UE3, UE4) via respective links in a network, wherein for each service multimedia content is available with different qualities of service (QoS0, QoS1, QoS2) at different IP multicast addresses (a.b.c.d; a.b.c.e; a.b.c.f), the system including at least one element (BM-SC) configured for:
- for each user (UE1, UE2, UE3, UE4) accessing one of said services, dynamically estimating the quality (K1, K2, ..., Kn) of the respective link and determining a corresponding quality of service (QoS0, QoS1, QoS2) that can be guaranteed to said user and a corresponding proper IP multicast address (a.b.c.d; a.b.c.e; a.b.c.f) said user must be associated with; and
- ensuring that each user (UE1, UE2, UE3, UE4) accessing one of said services via a respective link, is associated to said proper IP multicast address (a.b.c.d; a.b.c.e; a.b.c.f) said user must be associated with.

12. The system of claim 11, **characterized in that** said at least one element (BM-SC) is configured for forcing to leave their current IP multicast address and to join said proper corresponding IP multicast address (a.b.c.d; a.b.c.e; a.b.c.f) those users (UE1, UE2, UE3, UE4) for which said corresponding quality of service (QoS0, QoS1, QoS2) does not correspond to the current quality (K1, K2, ..., Kn) of said respective link.

13. The system of claim 12, **characterized in that** said at least one element (BM-SC) is configured for forcing to leave their current IP multicast address and to join said proper corresponding IP multicast address (a.b.c.d; a.b.c.e; a.b.c.f) those users (UE1, UE2, UE3, UE4) that:
- are not fully exploiting the quality of service available on said respective link, or
- are trying to access one of said services at a quality of service (QoS) different from said corresponding quality of service (QoS0, QoS1, QoS2).

14. The system of any claims 11 to 13, **characterized in that** said at least one element (BM-SC) is configured for sending leave-join messages to those users (UE1, UE2, UE3, UE4) that are forced to leave their current IP multicast address and to join said proper corresponding IP multicast address (a.b.c.d; a.b.c.e; a.b.c.f).

15. The system of any of the previous claims 11 to 14, **characterized in that** said at least one element (BM-SC) is configured for defining, for each of said services, a number (Ns) of quality of service (QoS) classes (QoS0, QoS1, QoS2), each class being **characterized by** a quality of service (QoS) profile identified by a set of values for respective encoding parameters (En1,En2,...Enn).

16. The system of claim 15, **characterized in that** said at least one element (BM-SC) is configured for selecting said respective encoding parameters (En1, En2, ..., Enn) out of the group consisting of assigned bandwidth, frame rate, and picture size.

17. The system of either of claims 15 or 16, **characterized in that** said at least one element (BM-SC) is configured for establishing a 1:1 association between each said quality of service class (QoS0, QoS1, QoS2) and one said proper corresponding IP multicast address (a.b.c.d; a.b.c.e; a.b.c.f).

18. The system of any of the previous claims 15 to 17, **characterized in that** said at least one element (BM-SC) is configured for:
- defining a quality of service metrics (J) as a function (F(J1,J2,...Jm)) of quality of service indicators (J1,...,Jm),
- defining a corresponding set of quality of service thresholds (T_{1,2}, T_{i,i+1},...T_{Ns-1,Ns}) within said quality of service metrics (J), and
- estimating the quality of said respective link based on said metrics (J) and univocally associating the quality estimated to one of said quality of service (QoS) classes (QoS0, QoS1, QoS2) by comparing the quality estimated with said quality of service thresholds (T_{1,2}, T_{i,i+1},...T_{Ns-1,Ns}).

19. The system of any of the previous claims, **characterized in that** said at least one element (BM-SC) is allocated at the Service Provider (BM-SC) side.

20. A communication network configured for delivery of services based on multicast multimedia contents to a set of users (UE1, UE2, UE3, UE4) via respective links, the network **characterized in that** it includes a system according to any of claims 10 to 19.

21. A user terminal (UE1, UE2, UE3, UE4) for use in the netwrok of Claim 20, **characterized in that** said user terminal is configured for receiving and implementing leave-join messages sent from said at least one element (BM-SC) whereby said user terminal (UE1, UE2, UE3, UE4) is adapted to leave its current IP multicast address and to join said proper corresponding IP multicast address (a.b.c.d; a.b.c.e; a.b.c.f).

22. A computer program product, loadable in the memory of at least one computer and including software code portions for performing the method of any of claims 1 to 10.
